# EUROPÄISCHE PATENTSCHRIFT

(11) **EP 1 692 677 B1**
(45) Veröffentlichungstag und Bekanntmachung des Hinweises auf die Patenterteilung: **23.01.2008**
(21) Anmeldenummer: 04797757.4
(22) Anmeldetag: 10.11.2004
(51) Int. Cl.: G08G 1/123

(54) **FAHRZEUGENDGERÄT UND ZUGEHÖRIGES LOGISTIKMANAGEMENTSYSTEM**
ON-BOARD VEHICLE TERMINAL AND ASSOCIATED LOGISTICS MANAGEMENT SYSTEM
TERMINAL EMBARQUE ET SYSTEME DE GESTION DE LA LOGISTIQUE ASSOCIE

(30) Priorität: 06.12.2003 DE 10357122
(43) Veröffentlichungstag der Anmeldung: 23.08.2006
(73) Patentinhaber: Daimler AG, 70327 Stuttgart (DE)
(72) Erfinder: LASCHKE, Christian, 12307 Berlin (DE); ZIVKOVIC, Tomislav, 14532 Kleinmachnow (DE)
(86) Internationale Anmeldenummer: PCT/EP2004/012689
(87) Internationale Veröffentlichungsnummer: WO 2005/055169

(56) Entgegenhaltungen:
- EP-A- 1 280 119
- WO-A1-98/21703
- WO-A2-02/06994
- DE-C1- 19 959 223

## Beschreibung

Die Erfindung betrifft ein Fahrzeugendgerät, d.h. einen fahrzeugseitigen Systemteil, für ein Logistikmanagementsystem nach dem Oberbegriff des Patentanspruchs 1 und ein zugehöriges Logistikmanagementsystem.

In modernen Transportfahrzeugen werden in Verbindung mit einer zugehörigen Dispositionszentrale zunehmend Logistikmanagementsysteme zur Planung und Steuerung von Transportaufträgen und Fahrzeugeinsätzen sowie zur Tourenplanung, zur auftragsorientierten Navigation und zur Zielführung von einzelnen Fahrzeugen eingesetzt. Zudem können mit dem Logistikmanagementsystem zur Dispositionszentrale gehörende Fahrzeuge geortet und deren Standort auf einer Karte dargestellt werden.

Die Anmelderin bietet zu diesem Zweck unter der Internet-Adresse http://www.fleetboard.com den Dienst "Fleetboard" mit dem Schlagwort "Flottenmanagement mit IQ" an. Durch den Dienst Fleetboard wird eine Kommunikation zwischen einer Dispositionszentrale und mindestens einem Fahrzeug ermöglicht, bei der in beiden Richtungen vorzugsweise logistische Daten übermittelt werden können. Dadurch kann die an diesem Logistikmanagementsystem beteiligte Dispositionszentrale automatisch Aufträge aus einem Auftragserfassungssystem übernehmen und auf die einzelnen beteiligten Fahrzeuge und Touren aufteilen und die Touren von Fahrzeugen planen. Die Position jedes Fahrzeugs kann ermittelt und auf einer Karte dargestellt werden. Die Auswertung der Touren und der aufgezeichneten Fahrzeugdaten unterstützt das Management der Fahrzeuge und erleichtert die Zuordnung von Kosten zu Aufträgen. Das Fahr zeugendgerät als fahrzeugseitiger Systemteil umfasst einen Fahrzeugrechner, eine Tastatur und eine Bildschirmanzeige sowie ein GSM-Telefon zur Kommunikation zwischen dem Fahrzeug und der zugehörigen Dispositionszentrale.

Im Artikel von H.-D. Chemnitz: "Informations- und Kommunikationssysteme im Nutzfahrzeug", VDI-Berichte 687 (1988), S. 461 bis 480 werden Logistikmanagementsysteme für Nutzfahrzeuge vorgestellt, die das Fahrzeug als mobilen Betriebsteil in die betriebliche Daten- und Kommunikationsorganisation einbeziehen. Im Fahrzeug sind Module zur Fahrerinformation, zur manuellen Datenerfassung, zum Belegdruck und zur Erfassung von Fahrdaten und Fahrzeugdaten vorhanden. Ein tragbares Handterminal dient zur Datenerfassung und als Sichtgerät für den Fahrer. Ein Fuhrparksystem führt Tourenplanungen sowie Analysen von Touren, vom Fuhrpark, von den Fahrzeugen, dem Personal und den Kosten durch. Das Fuhrparksystem und das zugehörige Fahrzeugsystem sind beispielsweise über Funk miteinander verbunden.

Aus der WO 98/21703 A1 geht ein System zur Steuerung einer aus einer Vielzahl von Lieferfahrzeugen bestehenden Fahrzeugflotte hervor. Die Koordination der Fahrzeugflotte erfolgt mittels einer gemeinsamen Dispositionszentrale, die über ein funkgestütztes Datenübertragungsnetzwerk mit den einzelnen Lieferfahrzeugen in Verbindung steht, wobei eine Gruppe räumlich verteilter Anwender zur Erteilung von Aufträgen beispielsweise über das Internet auf die Dispositionszentrale zugreifen kann. Jedes der Lieferfahrzeuge weist ein fahrzeugseitiges Endgerät zum Empfang abzuarbeitender Aufträge auf, die seitens der Dispositionszentrale durch Abgleich mit bereits bestehenden Auftragslisten unter Berücksichtigung vorgegebener, vom Anwender spezifizierbarer Filterkriterien an ein geeignetes Lieferfahrzeug der Fahrzeugflotte übermittelt und dem Fahrer des Lieferfahrzeugs in Gestalt einer entsprechenden Rollkarte angezeigt werden. Der Be- und Entladevorgang wird dabei durch Übermittlung an die Dispositionszentrale protokolliert. Gemäß einer dargestellten Weiterbildung ist zur Erteilung von Aufträgen ein unmittelbarer Zugriff der Anwender auf das fahrzeugseitige Endgerät möglich.

Die WO 02/06994 A2 offenbart ferner ein System zur Verwaltung logistischer Abläufe mittels eines Datenkommunikationsnetzwerks, letztlich also ein Logistikmanagementsystem. Das Logistikmanagementsystem dient der planmäßigen Organisation von Mitfahrgelegenheiten durch Nutzung eines örtlich verteilten Fahrzeugpools. Zur Anforderung eines Fahrzeugs sendet der potentielle Mitfahrer eine entsprechende Anfrage an eine Datenzentrale. Die Übermittlung der Anfrage an die Datenzentrale kann entweder über ein GSM-Netzwerk (Mobiltelefon) oder aber über das Internet (Client) erfolgen. Die Datenzentrale fordert den Nutzer auf, unter anderem die Abholadresse, die Zieladresse sowie einen Zeitpunkt für die Abholung anzugeben. Auf Grundlage dieser Angaben wählt die Datenzentrale ein geeignetes Fahrzeug aus dem Fahrzeugpool aus und sendet einen entsprechenden Auftragsdatensatz zur Anzeige über eine Anzeigeeinheit an den Fahrer des betreffenden Fahrzeugs. Nach Ausführung des Auftrags wird die Datenzentrale zur Rechnungsstellung veranlasst und der entsprechende Rechnungsbetrag von der Kreditkarte des Mitfahrers abgebucht.

Aufgabe der Erfindung ist es, ein Fahrzeugendgerät für ein Logistikmanagementsystem zur Verfügung zu stellen, das besonders gut an die Bedürfnisse im Verteil- und Lieferverkehr angepasst ist und die Verteilung und Lieferung von Waren erleichtert, und ein zugehöriges Logistikmanagementsystem anzugeben.

Die Erfindung löst diese Aufgabe durch ein Fahrzeugendgerät mit den Merkmalen des Patentanspruchs 1 und durch ein Logistikmanagementsystem mit den Merkmalen des Patentanspruchs 5.

Vorteilhafte Weiterbildungen der Erfindung sind in den abhängigen Ansprüchen angegeben.

Die Erfindung beruht auf der Idee, dass ein Fahrzeugendgerät für ein Logistikmanagementsystem nicht nur Auftragsdatensätze von seiner zugeordneten Dispositionszentrale empfängt, sondern auch von anderen Zentralen, die dem Fahrzeug entsprechende Auftragsdatensätze über ein Kommunikationssystem übertragen können. Ein zum Fahrzeugendgerät gehörender Fahrzeugrechner empfängt über das Kommunikationssystem die Auftragsdatensätze, die jeweils Daten über einen Auftragsort und einen Auftragstermin umfassen, und bereitet diese auf. Der Fahrzeugrechner erstellt dann eine Auftragsliste und zeigt diese dem Fahrer über eine Anzeigeeinheit an.

Durch das erfindungsgemäße Fahrzeugendgerät ist der Fahrer eines Transportfahrzeuges in der Lage, für verschiedene Auftraggeber, die als die weiteren Zentralen fungieren können, Waren, Pakete, Briefe usw. zu befördern und somit seine Transportkapazität optimal auszunutzen.

In vorteilhafter Ausgestaltung umfasst das Fahrzeugendgerät ein Navigationssystem, welches anhand der erstellten Auftragsliste eine Route berechnet und den Fahrer zum nächsten Auftragsort führt.

In weiterer Ausgestaltung prüft der Fahrzeugrechner bei Empfang eines neuen Auftragsdatensatzes durch einen Vergleich mit der bestehenden Auftragsliste, ob der neue Auftrag abgearbeitet werden kann, und zeigt das Prüfungsergebnis dem Fahrer über die Anzeigeeinheit an.

Bei einer vorteilhaften Weiterbildung des Fahrzeugendgeräts aktualisiert der Fahrzeugrechner die Auftragsliste nach Annahme des neuen Auftrags durch den Fahrer und zeigt die aktualisierte Auftragsliste dem Fahrer an.

In weiterer Ausgestaltung kann das Navigationssystem nach Annahme des Auftrags unter Berücksichtigung der bisherigen Auftragsorte und Auftragstermine eine neue Route berechnen und den Fahrer anhand der aktualisierten Route zum nächsten Auftragsort führen.

Durch das beschriebene Einbinden von neuen Aufträgen in die bestehende Auftragsliste versetzt das Fahrzeugendgerät das Fahrzeug in die Lage, flexibel auf neue Aufträge zu reagieren und seine Transportkapazität optimal auszunutzen.

Bei einer besonders vorteilhaften Weiterbildung des Fahrzeugendgeräts überträgt der Fahrzeugrechner nach Erreichen eines der Auftragsorte zur Bearbeitung des Auftrags die zugehörigen Auftragsdaten über eine entsprechende Schnittstelle an ein tragbares Handterminal, das nach der Bearbeitung des Auftrags auftragsrelevante Daten an den Fahrzeugrechner überträgt.

In weiterer Ausgestaltung ist das Handterminal in eine Aufnahme einführbar, welche die Schnittstelle zum Datenaustausch zwischen dem Handterminal und dem Fahrzeugrechner umfasst.

Das tragbare Handterminal umfasst vorzugsweise einen Barcodeleser zum Einlesen von Daten für die Auftragsbearbeitung.

Durch das so ausgeführte Handterminal kann der Fahrer einfach und schnell codierte Daten von einem Barcodeträger übernehmen und die eingelesenen Daten zur Weiterbearbeitung, insbesondere zur Erstellung von Liefer- und Kosteninformationen, an den Fahrzeugrechner übertragen.

Zusätzlich kann die Fahrzeugvorrichtung einen Barcodedrucker zum Drucken von codierten auftragsrelevanten Daten auf einen Barcodeträger umfassen.

Bei einer vorteilhaften Ausführung des Fahrzeugendgeräts ordnet der Fahrzeugrechner die auftragsrelevanten Daten nach Bearbeitung des Auftrags der beauftragenden Zentrale zu und überträgt diese Daten beispielsweise zur Rechnungserstellung an die zugeordnete Dispositionszentrale. Durch die Übertragung der Daten an die zugeordnete Dispositionszentrale kann diese eine kostenverursachende Verrechnung und eine Analyse und Dokumentation der verbrauchten Leistungskomponenten wie beispielsweise Fahrzeit, Wartezeit und Dienstleistung beim Kunden vornehmen.

In weiterer Ausgestaltung umfasst die Anzeigeeinheit einen Bildschirm und/oder eine Sprachausgabeeinheit.

Bei einer vorteilhaften Ausgestaltung der Erfindung sind der Bildschirm und die Eingabeeinheit als Touchscreen ausgeführt.

Für einen hohen Bedien- und Anzeigekomfort umfasst der Bildschirm zur Darstellung einer Menüstruktur mehrere Darstellungsbereiche, von denen mindestens einer über alle Menüebenen permanent angezeigt wird und von denen mindestens ein Darstellungsbereich in Abhängigkeit von einer ausgewählten Menüebene zur ausgewählten Menüebene gehörende Informationen anzeigt.

In einer ersten Menüebene umfasst der Bildschirm beispielsweise eine Hauptmenüleiste, einen Konfigurationsbereich für Systemeinstellungen und einen Systembereich zur Systemanmeldung.

In einer zweiten Menüebene stellt der Bildschirm beispielsweise Informationen vom Navigationssystem zur Zielführung oder die Auftragsliste oder Detailinformationen zu einem Auftrag dar.

Alternativ oder zusätzlich können dem Fahrer die Auftragsliste oder ein aktuell zu bearbeitender Auftrag durch das Sprachausgabesystem vorgelesen werden.

Ein erfindungsgemäßes Logistikmanagementsystem umfasst mindestens ein Fahrzeug mit dem erfindungsgemäßen Fahrzeugendgerät.

Vorteilhafte Ausführungsformen der Erfindung sind in den Zeichnungen dargestellt und werden nachfolgend beschrieben.
Es zeigen:
- Fig. 1: ein Blockschaltbild eines Logistikmanagementsystems;
- Fig. 2: ein Blockschaltbild eines Fahrzeugendgerätes für das Logistikmanagementsystem aus Fig. 1;
- Fig. 3: eine schematische Darstellung einer Bildschirmanzeige des Fahrzeugendgerätes von Fig. 2 in einer ersten Menüebene;
- Fig. 4: eine schematische Darstellung einer Bildschirmanzeige in einer zweiten Menüebene;
- Fig. 5: eine schematische Darstellung einer Bildschirmanzeige in einer dritten Menüebene; und
- Fig. 6: eine schematische Darstellung einer Bildschirmanzeige und eines Handterminals für das Fahrzeugendgerät.

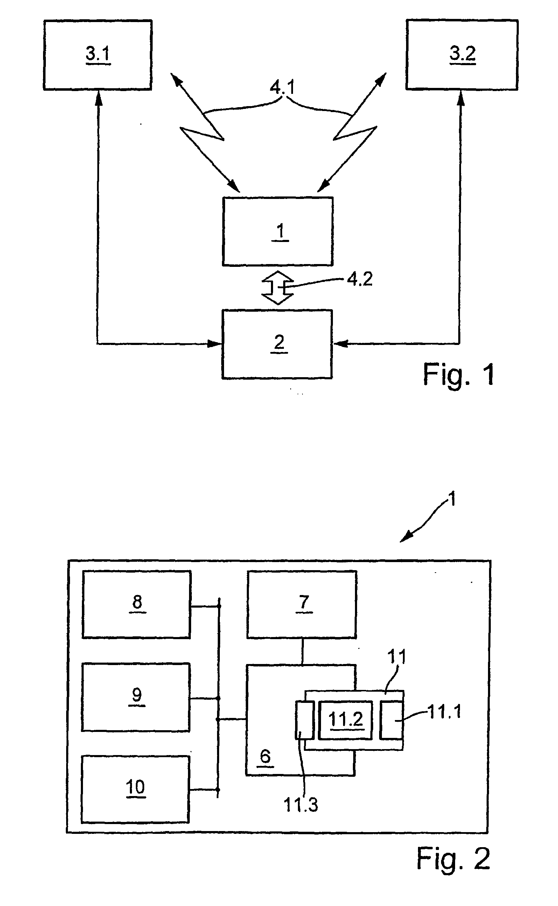

Das erfindungsgemäße Logistikmanagementsystem von Fig. 1 umfasst ein oder mehrere Fahrzeuge, von denen in Fig. 1 stellvertretend ein Fahrzeug 1 gezeigt ist, eine Dispositionszentrale 2 und eine oder mehrere weitere Zentralen, im Beispiel von Fig. 1 zwei weitere Zentralen 3.1, 3.2, die beispielsweise je einen zusätzlichen potentiellen Auftraggeber repräsentieren. Das mindestens eine Fahrzeug 1 und die zugehörige Dispositionszentrale 2 tauschen über eine Kommunikationsverbindung 4.2, die beispielsweise als GSM-Verbindung ausgeführt ist, Daten aus. So überträgt die Dispositionszentrale 2 insbesondere Auftragsdatensätze an das Fahrzeug 1, die anschließend von diesem bearbeitet werden.

Die jeweilige weitere Zentrale 3.1, 3.2 umfasst ein nicht dargestelltes Kommunikationssystem zum Datenaustausch mit dem jeweiligen Fahrzeug 1 über entsprechende Kommunikationsverbindungen 4.1, die ebenfalls als GSM-Verbindungen ausgeführt sein können. Über die Kommunikationsverbindungen 4.1 können auch die weiteren Zentralen 3.1, 3.2 Auftragsdatensätze an das mindestens eine Fahrzeug 1 senden. Das Fahrzeug 1 prüft nach Empfang eines solchen weiteren Auftragsdatensatzes, ob der empfangene Auftrag von ihm ausgeführt werden kann oder nicht. Nach dieser Überprüfung wird dem Auftraggeber über eine der Kommunikationsverbindungen 4.1 von dem Fahrzeug 1 mitgeteilt, ob der Auftrag von ihm bearbeitet wird oder nicht.

Fig. 2 zeigt ein Fahrzeugendgerät für das Logistikmanagementsystem aus Fig. 1. Im dargestellten Ausführungsbeispiel umfasst das Fahrzeugendgerät eine kombinierte Eingabe- und Ausgabeeinheit 7, die beispielsweise als Touchscreen ausgeführt ist, einen Fahrzeugrechner 6 mit einer Aufnahme für ein trag bares Handterminal 11, eine Kommunikationseinheit 8 zum Datenaustausch mit der zugeordneten Dispositionszentrale 2 und den weiteren potentiellen Auftraggebern 3.1, 3.2, ein Navigationssystem 9 und einen Drucker 10 für Barcodeträger. Das tragbare Handterminal 11 umfasst einen Barcodescanner 11.1, eine Eingabe- und/oder Ausgabeeinheit 11.2 und eine Schnittstelle 11.3 zum Datenaustausch mit dem Fahrzeugrechner 6. Nachfolgend wird die Betriebsweise der einzelnen Komponenten des Logistikmanagementsystems anhand der Fig. 1 bis 6 beschrieben.

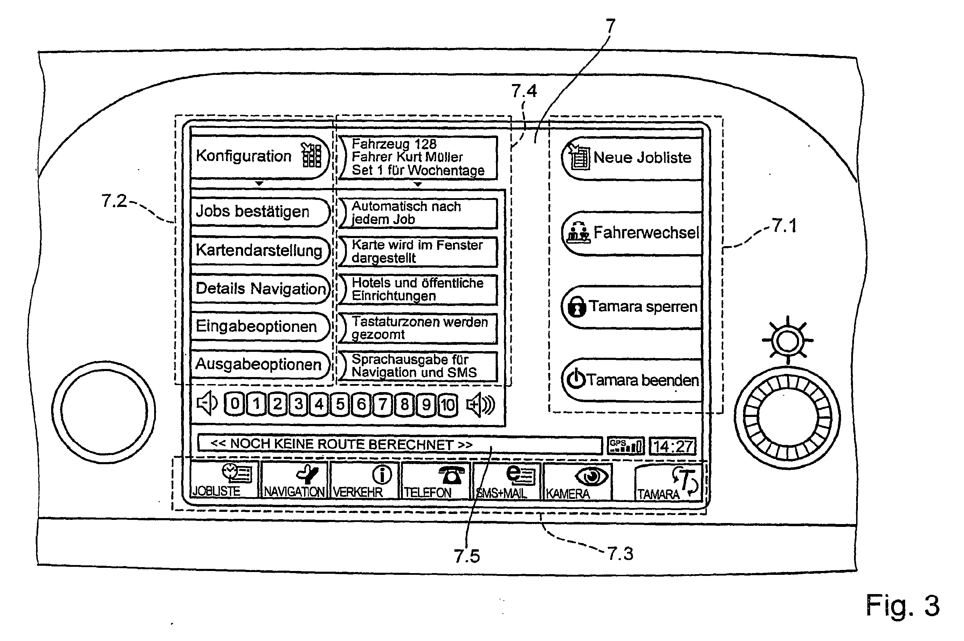

Das Fahrzeugendgerät des Fahrzeugs 1 empfängt mit der Kommunikationseinheit 8 über die Kommunikationsverbindungen 4.1 und 4.2 Auftragsdatensätze von der zugehörigen Dispositionszentrale 2 und den Zentralen 3.1, 3.2 der weiteren Auftraggeber. Nach dem Einschalten des Fahrzeugendgeräts zeigt der Touchscreen 7 dem Fahrer eine erste Menüebene einer Menüstruktur an, die in Fig. 3 dargestellt ist.

Die Anzeige des Touchscreens 7 umfasst mehrere Darstellungsbereiche 7.1, 7.2, 7.3, die zur Auswahl angezeigter Funktionen als berührungssensitive Schaltflächen ausgeführt sind. Weitere Darstellungsbereiche 7.4 und 7.5 dienen zur Anzeige von Informationen über auszuführende Funktionen oder eingestellte Parameter. Der Darstellungsbereich 7.3 ist als Hauptmenüleiste ausgeführt und wird über alle Menüebenen permanent angezeigt. Die Darstellungsbereiche 7.1, 7.2, 7.4 und 7.5 variieren mit ihrem Inhalten in Abhängigkeit von der aktivierten Menüebene und zeigen beispielsweise zur ausgewählten Menüebene gehörende Informationen an.

Der Darstellungsbereich 7.1 zeigt einen Systembereich an, in dem der Fahrer sich über eine entsprechende Betätigung der zugehörigen Schaltflächen im Logistikmanagementsystem, im gezeigten Beispiel unter der Bezeichnung "Tamara" geführt, anmelden bzw. abmelden kann. Dies umfasst insbesondere das Anmelden und Abmelden an bzw, von der Dispositionszentrale 2 und einer oder mehreren der weiteren Zentralen 3.1, 3.2. Der Darstellungsbereich 7.2 zeigt einen Konfigurationsbereich an, in dem der Fahrer über eine entsprechende Betätigung der zugehörigen Schaltflächen Systemeinstellungen verändern kann. Die aktuellen Systemeinstellungen bzw. Informationen zu aktuellen Systemeinstellungen werden im Darstellungsbereich 7.4 angezeigt.

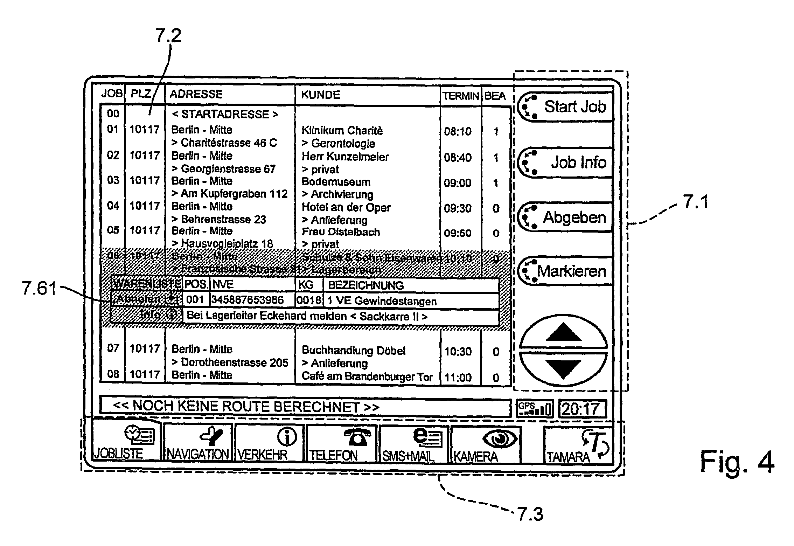

Durch Betätigung einer Schaltfläche "Jobliste" in der Hauptmenüleiste 7.3 berechnet der Fahrzeugrechner 6 aus den bisher über die Kommunikationseinheit 8 von der Dispositionszentrale 2 oder von den anderen Auftraggebern 3.1, 3.2 empfangenen Auftragsdatensätzen eine aktuelle Auftragsliste 7.6 und zeigt diese dem Fahrer in einer zweiten Menüebene am Touchscreen 7 an. Diese zweite Menüebene ist in Fig. 4 dargestellt. Der Darstellungsbereich 7.1 und die zugehörigen Schaltflächen werden in dieser zweiten Menüebene zum Bearbeiten der Auftragsliste 7.6 verwendet.

Innerhalb der aktuellen Auftragsliste 7.6 werden in einem weiteren Darstellungsbereich 7.61 detaillierte Informationen zum ausgewählten bzw. markierten Auftrag angezeigt, im gezeigten Beispiel zu einem Auftrag mit der Nummer 06.

Ein Auftragsdatensatz umfasst jeweils Daten über einen Auftragsort (Adresse) und einen Auftragstermin (Termin), zudem kann der Auftragsdatensatz weitere detaillierte Informationen wie Name des Kunden und Art des Auftrags umfassen, beispielsweise ob Waren abgeholt oder angeliefert werden sollen, ob zusätzliche Hilfsmittel wie eine Sackkarre oder ein Hubwagen zur Bearbeitung des Auftrags erforderlich sind oder wer der Ansprechpartner am Auftragsort ist.

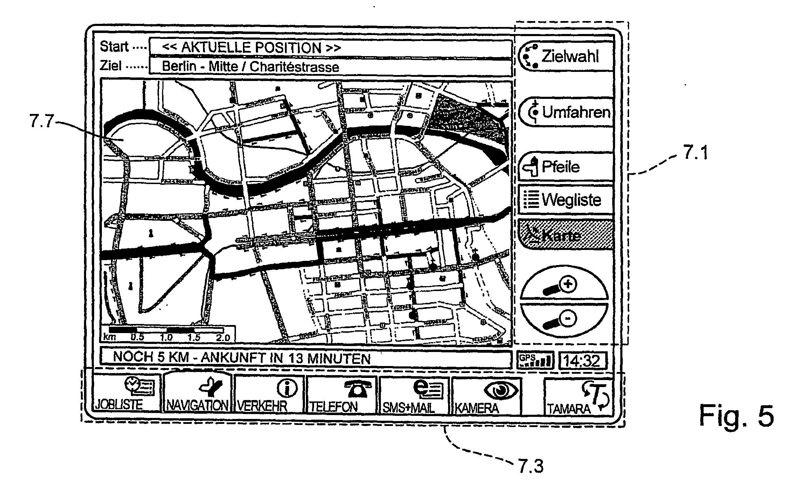

Das Navigationssystem 9 berechnet anhand der vom Fahrzeugrechner 6 erstellten Auftragsliste eine Route und führt den Fahrer zum nächsten Auftragsort. Alternativ ist es möglich, dass die Route in der zum Fahrzeug 1 gehörenden Dispositionszentrale 2 berechnet wird und anschließend an das Fahrzeugendgerät übertragen wird. Zur Routenberechnung überträgt das Fahrzeugendgerät in diesem Fall die erstellte Auftragsliste an die Dispositionszentrale 2. Die berechnete Route wird dem Fahrer nach einer Betätigung einer Schaltfläche "Navigation" in der Hauptmenüleiste 7.3 in einer in Fig. 5 dargestellten dritten Menüebene angezeigt, beispielsweise als Kartendarstellung 7.7. In der gezeigten dritten Menüebene wird der Darstellungsbereich 7.1 mit den zugehörigen Schaltflächen zur Bedienung des Navigationssystems 9 verwendet.

Empfängt die Kommunikationseinheit 8 während des Betriebs des Logistikmanagementsystems einen neuen Auftragsdatensatz, dann prüft der Fahrzeugrechner 6 durch einen Vergleich mit der bestehenden Auftragsliste 7.6, ob der neue Auftrag bearbeitet werden kann, und zeigt das Prüfungsergebnis dem Fahrer über den Touchscreen 7 an. Nach der Feststellung des Fahrzeugrechners 6, ob der Auftrag bearbeitet werden kann, wird durch Übermittlung einer entsprechenden Nachricht an den Auftraggeber, d.h. an die Dispositionszentrale 2 oder einen der weiteren Auftraggeber 3.1, 3.2, vom Fahrer bzw. vom Fahrzeugrechner 6 mitgeteilt, ob der Auftrag angenommen oder abgelehnt wird.

Nach Annahme des Auftrags durch den Fahrer aktualisiert der Fahrzeugrechner 6 die Auftragsliste 7.6 durch Aufnahme des neuen Auftrags und zeigt die aktualisierte Auftragsliste dem Fahrer an. Die Annahme des.Auftrags und die Aktualisierung der Auftragsliste kann der Fahrer beispielsweise durch eine Betätigung der Schaltfläche "Neue Jobliste" im Darstellungsbereich 7.1 in der ersten Menüebene aktivieren.

Nach Annahme des Auftrags berechnet das Navigationssystem 9 unter Berücksichtigung der bisherigen Auftragsorte und Auftragstermine eine neue Route und führt den Fahrer anhand der aktualisierten Route zum nächsten Auftragsort.

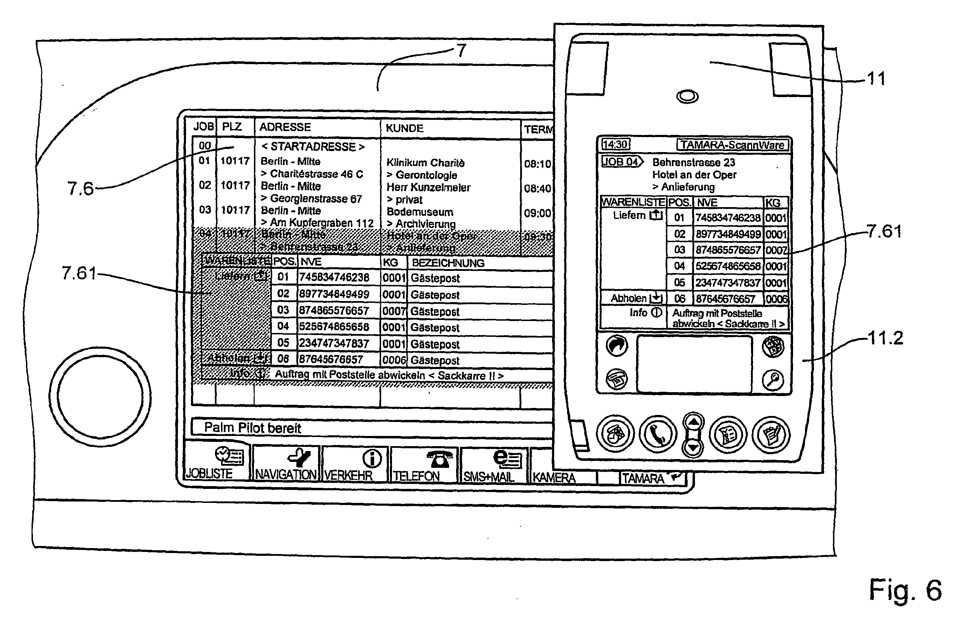

Nach Erreichen eines der Auftragsorte überträgt der Fahrzeugrechner 6 zur Bearbeitung des Auftrags die zugehörigen Auftragsdaten über die Schnittstelle 11.3 an das tragbare Handterminal 11, das nach der Bearbeitung des Auftrags auftragsrelevante Daten an den Fahrzeugrechner 6 überträgt. Dieser Vorgang wird durch Fig. 6 verdeutlicht. Der Touchscreen 7 zeigt in Fig. 6 die Auftragsliste und den zum aktuellen Auftragsort gehörenden Auftragsdatensatz im Darstellungsbereich 7.61 an. Wie aus Fig. 6 weiter ersichtlich ist, zeigt die Ausgabeeinheit 11.2 des tragbaren Handterminals 11 den gleichen Auftragsdatensatz an, da die entsprechenden auftragsrelevanten Daten vom Fahrzeugrechner 6 über die Schnittstelle 11.3 an das tragbare Handterminal 11 übertragen wurden.

Während der Fahrt kann das Handterminal 11 beispielsweise in eine Aufnahme eingeführt sein, welche die Schnittstelle 11.3 zum Datenaustausch zwischen dem Handterminal 11 und dem Fahrzeugrechner 6 umfasst. Es ist aber auch möglich, dass die Schnittstelle eine Datenübertragung mit einer größeren Reichweite, beispielsweise mittels Funk, durchführt, so dass das Handterminal 11 zur Datenübertragung nicht in die Aufnahme eingeführt werden muss.

Zum Aufnehmen von auftragsrelevanten Daten von abzuholenden oder auszuliefernden Waren umfasst das tragbare Handterminal 11 im dargestellten Ausführungsbeispiel einen Barcodeleser 11.1 zum Einlesen von Daten für die Auftragsbearbeitung.

Zum Kennzeichnen von Waren umfasst das Fahrzeugendgerät im dargestellten Ausführungsbeispiel einen Barcodedrucker 10, mit dem codierte auftragsrelevante Daten auf einen Barcodeträger gedruckt werden können.

Nach Bearbeitung des Auftrags ordnet der Fahrzeugrechner 6 die auftragsrelevanten Daten dem Auftraggeber zu, d.h. der Dispositionszentrale 2 oder einer dem weiteren Auftraggeber 3.1, 3.2, und überträgt über die Kommunikationseinheit 8 auftragsrelevante Daten, wie Liefer- und/oder Abrechnungsdaten, zur Rechnungserstellung an die Dispositionszentrale 2. Die Rechnung für die Auftragsbearbeitung wird dann von der Dispositionszentrale an die weiteren Auftraggeber 3.1 oder 3.2 übertragen.

Die in Fig. 2 dargestellte Eingabe- und Ausgabeeinheit umfasst zur leichteren Bedienung des Fahrzeugendgeräts zusätzlich eine Spracheingabe- und Sprachausgabeeinheit. So kann dem Fahrer beispielsweise die Auftragsliste vorgelesen werden, wodurch er weniger vom Verkehrsgeschehen abgelenkt wird.

Durch das erfindungsgemäße Fahrzeugendgerät und das zugehörige Logistikmanagementsystem kann der Fahrer nicht nur Auftragsdatensätze von seiner zugeordneten Dispositionszentrale, sondern auch von anderen Zentralen bearbeiten, die dem Fahr zeug entsprechende Auftragsdatensätze über ein Kommunikationssystem übertragen. Dadurch ist der Fahrer eines Transportfahrzeuges in der Lage, direkt von verschiedenen Auftraggebern Aufträge anzunehmen und Waren, Pakete, Briefe usw. zu befördern und somit seine Transportkapazität optimal auszunutzen.

Zudem kann der Fahrer durch das beschriebene Einbinden von neuen Aufträgen in die bestehende Auftragsliste flexibel auf neue Aufträge reagieren und seine Transportkapazität optimieren. Das erfindungsgemäße Fahrzeugendgerät und das zugehörige Logistikmanagementsystem sind somit sehr gut an die Bedürfnisse im Verteil- und Lieferverkehr angepasst, wodurch die Verteilung und Lieferung von Waren erleichtert wird.

## Patentansprüche

1. Fahrzeugendgerät für ein Logistikmanagementsystem, mit einer Anzeigeeinheit (7), einem Fahrzeugrechner (6) zur Erfassung und Aufbereitung von Auftragsdatensätzen, und einer Kommunikationseinheit (8) zum Datenaustausch mit einer zugeordneten Dispositionszentrale (2), die Auftragsdatensätze an das Fahrzeugendgerät überträgt, wobei das Fahrzeugendgerät nach Bearbeitung eines Auftrags auftragsrelevante Daten an die Dispositionszentrale (2) überträgt, wobei der Fahrzeugrechner (6) dafür ausgelegt ist, über die Kommunikationseinheit (8) von mindestens einer weiteren Zentrale (3.1, 3.2) Auftragsdatensätze zu empfangen und aufzubereiten, die jeweils Daten über einen Auftragsort und einen Auftragstermin umfassen, und eine Auftragsliste (7.6) zu erstellen, wobei die Auftragsdatensätze und die Auftragsliste (7.6) dem Fahrer über die Anzeigeeinheit (7) angezeigt werden,
**dadurch gekennzeichnet,**
**dass** der Fahrzeugrechner (6) bei Empfang eines neuen Auftragsdatensatzes durch einen Vergleich mit der bestehenden Auftragsliste (7.6) prüft, ob der neue Auftrag abgearbeitet werden kann, und das Prüfungsergebnis zur Annahme durch den Fahrer über die Anzeigeeinheit (7) anzeigt.

2. Fahrzeugendgerät nach Anspruch 1,
**gekennzeichnet durch** ein Navigationssystem (9), welches anhand der erstellten Auftragsliste (7.6) eine Route berechnet und den Fahrer zum nächsten Auftragsort führt.

3. Fahrzeugendgerät nach Anspruch 2,
**dadurch gekennzeichnet,**
**dass** der Fahrzeugrechner (6) nach Annahme des Auftrags durch den Fahrer die Auftragsliste (7.6) durch Aufnahme des neuen Auftrags aktualisiert und die aktualisierte Auftragsliste (7.6) dem Fahrer anzeigt.

4. Fahrzeugendgerät nach Anspruch 3,
**dadurch gekennzeichnet,**
**dass** das Navigationssystem (9) nach Annahme des Auftrags unter Berücksichtigung der bisherigen Auftragsorte und Auftragstermine eine neue Route berechnet und den Fahrer anhand der aktualisierten Route zum nächsten Auftragsort führt.

5. Fahrzeugendgerät nach einem der Ansprüche 2 bis 4,
**dadurch gekennzeichnet,**
**dass** der Fahrzeugrechner (6) nach Erreichen eines der Auftragsorte zur Bearbeitung des Auftrags die zugehörigen Auftragsdaten über eine entsprechende Schnittstelle (11.3) an ein tragbares Handterminal (11) überträgt, das nach der Bearbeitung des Auftrags auftragsrelevante Daten an den Fahrzeugrechner (6) überträgt.

6. Fahrzeugendgerät nach Anspruch 5,
**dadurch gekennzeichnet,**
**dass** das Handterminal (11) in eine Aufnahme einführbar ist, welche die Schnittstelle (11.3) zum Datenaustausch zwischen dem Handterminal (11) und dem Fahrzeugrechner (6) umfasst.

7. Fahrzeugendgerät nach Anspruch 5 oder 6,
**dadurch gekennzeichnet,**
**dass** das tragbare Handterminal (11) einen Barcodeleser (11.1) zum Einlesen von Daten für die Auftragsbearbeitung umfasst.

8. Fahrzeugendgerät nach einem der Ansprüche 5 bis 7, **gekennzeichnet durch** einen Barcodedrucker (10) zum Drucken von codierten auftragsrelevanten Daten auf einen Barcodeträger.

9. Fahrzeugendgerät nach einem der Ansprüche 5 bis 8,
**dadurch gekennzeichnet,**
**dass** der Fahrzeugrechner (6) die auftragsrelevanten Daten nach Bearbeitung des Auftrags der beauftragenden Zentrale (2, 3.1, 3.2) zuordnet.

10. Fahrzeugendgerät nach einem der Ansprüche 1 bis 9,
**dadurch gekennzeichnet,**
**dass** die Anzeigeeinheit (7) einen Bildschirm und/oder eine Sprachausgabeeinheit umfasst.

11. Fahrzeugendgerät nach Anspruch 10,
**dadurch gekennzeichnet,**
**dass** der Bildschirm und eine Eingabeeinheit in einer als Touchscreen (7) ausgeführten Baueinheit integriert sind.

12. Fahrzeugendgerät nach Anspruch 10 oder 11,
**dadurch gekennzeichnet,**
**dass** der Bildschirm zur Darstellung einer Menüstruktur mehrere Darstellungsbereiche (7.1, 7.2, 7.3, 7.4, 7.5) umfasst, von denen mindestens einer (7.3) über alle Menüebenen permanent angezeigt wird und von denen mindestens ein Darstellungsbereich (7.2, 7.3, 7.4, 7.5) in Abhängigkeit von einer ausgewählten Menüebene zur ausgewählten Menüebene gehörende Informationen anzeigt.

13. Fahrzeugendgerät nach Anspruch 12,
**dadurch gekennzeichnet,**
**dass** der Bildschirm (7) in einer ersten Menüebene eine Hauptmenüleiste (7.3), einen Konfigurationsbereich (7.2) für Systemeinstellungen und einen Systembereich (7.1) zur Systemanmeldung umfasst.

14. Fahrzeugendgerät nach Anspruch 12 oder 13,
**dadurch gekennzeichnet,**
**dass** der Bildschirm (7) in einer zweiten Menüebene Informationen des Navigationssystems (9) zur Zielführung oder die Auftragsliste (7.6) oder Detailinformationen (7.61) zu einem Auftrag darstellt.

15. Logistikmanagementsystem mit mindestens einem Fahrzeug (1) und einer zugeordneten Dispositionszentrale (2), **dadurch gekennzeichnet, dass** das mindestens eine Fahrzeug (1) ein Fahrzeugendgerät nach einem der Ansprüche 1 bis 14 umfasst.

## Claims

1. On-board vehicle terminal for a logistics management system, with a display unit (7), an on-board vehicle computer (6) for the reception and preparation of order data sets, and a communication unit (8) for data exchange with an associated control management station (2) which transmits order data sets to the vehicle terminal, such that when an order has been fulfilled the on-board vehicle terminal transmits order-relevant data to the central management station (2), the on-board vehicle computer (6) being designed so that, via the communication unit (8), it can also receive and prepare order data sets from at least one other control station (3.1, 3.2), the said data sets in each case comprising data about an order location and an order time, and so that it draws up a joblist (7.6), the order data set and the joblist (7.6) being displayed to the driver by the display unit (7),
**characterised in that**
on receiving a new order data set the vehicle compute (6) checks by comparison with the existing joblist (7.6) whether the new order can be fulfilled, and displays the result of the check via the display unit (7) for acceptance by the driver.

2. On-board vehicle terminal according to Claim 1,
**characterised in that**
it comprises a navigation system (9) which, having regard to the joblist (7.6) drawn up, computes a route and guides the driver to the next order location.

3. On-board vehicle terminal according to Claim 2,
**characterised in that**
once the driver has accepted the order, the on-board vehicle computer (6) updates the joblist (7.6) by adding the new order and displays the updated joblist (7.6) to the driver.

4. On-board vehicle terminal according to Claim 3,
**characterised in that**
once the order has been accepted, having regard to the previous order locations and times the navigation system (9) computes a new route and guides the driver to the next order location on the basis of the updated route.

5. On-board vehicle terminal according to any of Claims 2 to 4,
**characterised in that**
when one of the order locations is reached, to enable the order to be processed the on-board vehicle computer (6) transmits the associated order data via a corresponding interface (11.3) to a portable manual terminal (11), which once the order has been processed, transmits order-relevant data back to the vehicle computer (6).

6. On-board vehicle terminal according to Claim 5,
**characterised in that**
the manual terminal (11) can be placed in a holder which comprises the interface (11.3) for data exchange between the manual terminal (11) and the vehicle computer (6).

7. On-board vehicle terminal according to Claims 5 or 6,
**characterised in that**
the portable manual terminal (11) comprises a barcode reader (11.1) for reading in data for the processing of the order.

8. On-board vehicle terminal according to any of Claims 5 to 7,
**characterised in that**
it comprises a barcode printer (10) for printing coded order-relevant data onto a barcode carrier.

9. On-board vehicle terminal according to any of Claims 5 to 8,
**characterised in that**
once the order has been fulfilled, the on-board vehicle computer (6) assigns the order-relevant data to the control station (2, 3.1, 3.2) that placed the order.

10. On-board vehicle terminal according to any of Claims 1 to 9,
**characterised in that**
the display unit (7) comprises a monitor screen and/or a speech output unit.

11. On-board vehicle terminal according to Claim 10,
**characterised in that**
the monitor screen and an input unit are integrated in a structural unit made as a touchscreen (7).

12. On-board vehicle terminal according to Claims 10 or 11,
**characterised in that**
for the display of a menu structure the monitor screen has a plurality of display zones (7.1, 7.2, 7.3, 7.4, 7.5), at least one of which (7.3) is displayed all the time at any menu level, and at least one display zone (7.2, 7.3, 7.4, 7.5) displays information pertaining to a selected menu level as a function of the menu level selected.

13. On-board vehicle terminal according to Claim 12,
**characterised in that**
at a first menu level the monitor screen (7) comprises a main menu bar (7.3), a configuration zone (7.2) for system settings and a system zone (7.1) for system messages.

14. On-board vehicle terminal according to Claims 12 or 13,
**characterised in that**
at a second menu level the monitor screen (7) displays information of the navigation system (9) for destination guidance, or the joblist (7.6), or detailed information (7.61) about an order.

15. Logistics management system with at least one vehicle (1) and an associated central management station (2),
**characterised in that**
the at least one vehicle (1) has an on-board vehicle terminal according to any of Claims 1 to 14.

## Revendications

1. Terminal de bord pour un système de gestion de la logistique, avec une unité d'affichage (7), un ordinateur de bord (6) pour la détection et le traitement de blocs de données de commande et une unité de communication (8) pour l'échange de données avec une centrale d'ordonnancement associée (2) qui transfère des blocs de données de commande au terminal de bord embarqué, dans lequel, après le traitement d'une commande, le terminal de bord transfère des données concernant la commande à la centrale d'ordonnancement (2), l'ordinateur de bord (6) étant conçu pour recevoir et traiter, par l'intermédiaire de l'unité de communication (8) d'au moins une autre centrale (3.1, 3.2), des blocs de données de commande qui comprennent chacun des données sur un lieu de commande et une date de commande et pour établir une liste de commandes (7.6), les blocs de données de commandes et la liste de commandes (7.6) étant indiqués au conducteur au moyen de l'unité d'affichage (7), **caractérisé en ce que**, lorsqu'un nouveau bloc de données de commandes est reçu, l'ordinateur de bord (6) vérifie à l'aide d'une comparaison avec la liste de commandes en cours (7.6) si la nouvelle commande peut être traitée et affiche le résultat de la vérification pour que le conducteur l'accepte au moyen de l'unité d'affichage (7).

2. Terminal de bord selon la revendication 1, **caractérisé par** un système de navigation (9) qui calcule un itinéraire à l'aide de la liste de commandes établie (7.6) et qui conduit le conducteur jusqu'au lieu de commande suivant.

3. Terminal de bord selon la revendication 2, **caractérisé en ce que**, après l'acceptation de la commande par le conducteur, l'ordinateur de bord (6) actualise la liste de commandes (7.6) par l'enregistrement de la nouvelle commande et affiche la liste de commandes (7.6) actualisée pour le conducteur.

4. Terminal de bord selon la revendication 3, **caractérisé en ce que**, après l'acceptation de la commande, le système de navigation (9) calcule un nouvel itinéraire en tenant compte des lieux de commandes et des dates de commandes connus jusqu'à présent et conduit le conducteur jusqu'au lieu de commande suivant à l'aide de l'itinéraire actualisé.

5. Terminal de bord selon l'une quelconque des revendications 2 à 4, **caractérisé en ce que**, après l'arrivée à l'un des lieux de commandes, pour le traitement de la commande, l'ordinateur de bord (6) transfère les données de commandes concernées, par l'intermédiaire d'un interface approprié (11.3), à un terminal portatif (11) qui transmet les données concernant la commande à l'ordinateur de bord (6) après le traitement de la commande.

6. Terminal de bord selon la revendication 5, **caractérisé en ce que** le terminal portatif (11) peut être inséré dans un logement qui renferme l'interface (11.3) pour l'échange de données entre le terminal portatif (11) et l'ordinateur de bord (6).

7. Terminal de bord selon la revendication 5 ou 6, **caractérisé en ce que** le terminal portatif (11) comprend un lecteur de code-barres (11.1) pour la lecture de données pour le traitement de la commande.

8. Terminal de bord selon l'une quelconque des revendications 5 à 7, **caractérisé par** une imprimante de code-barres (10) pour l'impression de données codées concernant la commande sur un support de code-barres.

9. Terminal de bord selon l'une quelconque des revendications 5 à 8, **caractérisé en ce que** l'ordinateur de bord (6) affecte les données concernant la commande à la centrale exécutant la commande (2, 3.1, 3.2) après le traitement de la commande.

10. Terminal de bord selon l'une quelconque des revendications 1 à 9, **caractérisé en ce que** l'unité d'affichage (7) comprend un écran et/ou une unité de réponse vocale.

11. Terminal de bord selon la revendication 10, **caractérisé en ce que** l'écran et une unité de saisie sont intégrés dans une unité modulaire conçue comme un écran tactile (7).

12. Terminal de bord selon la revendication 10 ou 11, **caractérisé en ce que**, pour l'affichage d'une structure de menu, l'écran comporte plusieurs zones d'affichage (7.1, 7.2, 7.3, 7.4, 7.5) parmi lesquelles au moins une (7.3) est affichée en permanence à tous les niveaux du menu et parmi lesquelles au moins une zone d'affichage (7.2, 7.3, 7.4, 7.5) affiche des informations relatives au niveau de menu sélectionné en fonction d'un niveau de menu sélectionné.

13. Terminal de bord selon la revendication 12, **caractérisé en ce que** l'écran (7) comporte, à un premier niveau de menu, une barre des menus principaux (7.3), une zone de configuration (7.2) pour les réglages du système et une zone du système (7.1) pour l'activation du système.

14. Terminal de bord selon la revendication 12 ou 13, **caractérisé en ce que** l'écran (7) présente, à un deuxième niveau de menu, des informations du système de navigation (9) sur le guidage vers la cible ou la liste de commandes (7.6) ou des informations détaillées (7.61) sur une commande.

15. Système de gestion de la logistique avec au moins un véhicule automobile (1) et une centrale d'ordonnancement associée (2), **caractérisé en ce que** le au moins un véhicule automobile (1) comprend un terminal de bord selon l'une quelconque des revendications 1 à 14.
